# EUROPEAN PATENT APPLICATION

(11) **EP 3 640 584 A1**
(43) Date of publication of application: **22.04.2020**
(21) Application number: 18817495.7
(22) Date of filing: 16.04.2018
(51) Int. Cl.: G01B 11/25, G01N 21/88

(54) **INSPECTION DEVICE**

(30) Priority: 16.06.2017 JP 2017118775
(71) Applicant: Opton Co., Ltd., Seto-shi, Aichi 489-8645 (JP)
(72) Inventor: YOGO, Teruaki, Seto-shi Aichi 489-8645 (JP)
(74) Representative: AWA Sweden AB
(86) International application number: PCT/JP2018/015712
(87) International publication number: WO 2018/230134

(57) **Abstract**

A controller measures a three-dimensional surface shape of a workpiece from an image of the workpiece, the image being taken by an imaging unit and the image including a specific optical pattern projected by the imaging unit. The controller collates the measured three-dimensional surface shape of the workpiece and a nominal contour data representing a three-dimensional surface shape of a non-defective product corresponding to the workpiece, and the controller detects, as a possible molding fault, a portion recognized to show a shape different from the three-dimensional surface shape of the non-defective product in the workpiece. The controller specifies, as a molding fault, among the detected possible molding faults, only a possible molding fault in which a dimension of the shape is equal to or more than a criterion value representing a criterion for the molding fault.

## Description

### CROSS-REFERENCE TO RELATED APPLICATION

This international application claims the benefit of Japanese Patent Application No. 2017-118775 filed on June 16, 2017 with the Japan Patent Office, and the entire disclosure of Japanese Patent Application No. 2017-118775 is incorporated herein by reference.

### TECHNICAL FIELD

The present disclosure relates to an inspection device to inspect a molding fault in a molded article.

### BACKGROUND ART

Conventionally, molded articles produced by molding such as press-forming and injection molding have been inspected by a visual inspection and a manual operation of a measuring instrument to inspect the presence or absence of a molding fault. The molding fault as used herein is a portion pertinent to molding inferiority including a flaw, dent, missing part, burr, crack, dross, and peeling of plating generated during a molding process. The visual inspection and the manual operation of the measuring instrument may require relatively long time to inspect one molded article. Thus, time and cost required for a total inspection of mass-produced molded articles may become unacceptable. When the time and cost required for the total inspection are unacceptable, there has been no choice but to conduct a sampling inspection in which a sample is taken from a whole lot and inspected.

### PRIOR ART DOCUMENT

### PATENT DOCUMENT

Patent Document 1: Japanese Unexamined Patent Application Publication No. 2015-114309

### SUMMARY OF THE INVENTION

### PROBLEMS TO BE SOLVED BY THE INVENTION

As a technique to measure a surface shape of a measurement target with high speed and high accuracy, a technique of a three-dimensional image measurement as described in Patent Document 1, for example, has been known. The inventors applied this type of technique of the three-dimensional image measurement, and earnestly developed a system in which the presence or absence of the molding faults in the molded articles can be inspected at a high speed with high accuracy, and in which the total inspection of the mass-produced molded articles can be realized. One aspect of the present disclosure is, preferably, to inspect the presence or absence of the molding fault in the molded articles at a high speed with high accuracy by using the three-dimensional image measurement.

### MEANS FOR SOLVING THE PROBLEMS

The inspection device in one embodiment of the present disclosure includes a projection unit, an imaging unit, a measuring unit, and a comparing and detecting unit, and a fault specifying unit. The projection unit is configured to project a specific optical pattern onto a given imaging range. The imaging unit is configured to take an image including the optical pattern projected onto an inspection target placed within the imaging range. The measuring unit is configured to measure a three-dimensional surface shape of the inspection target based on the optical pattern included in the image taken by an imaging device.

The comparing and detecting unit collates the three-dimensional surface shape measured by the measuring unit and a given nominal contour data representing a three-dimensional surface shape of a non-defective product corresponding to the inspection target. The comparing and detecting unit is configured to detect a portion recognized to show a shape different from the three-dimensional surface shape of the non-defective product in the three-dimensional surface shape of the inspection target, as a possible molding fault, together with a dimension of the shape. The fault specifying unit is configured to specify, as a molding fault, only a possible molding fault in which a dimension of a shape of the possible molding fault is equal to or more than a given reference representing a criterion for the molding fault, among a plurality of the possible molding faults detected by the comparing and detecting unit.

According to the inspection device of the present disclosure, it is possible to inspect the presence or absence of the molding fault in the molded article at a high speed with high accuracy by using the three-dimensional image measurement. Specifically, the inspection device of the present disclosure collates the three-dimensional surface shape of the inspection target measured by the method of the three-dimensional image measurement, and the nominal contour data representing the three-dimensional surface shape of the non-defective product, thereby detecting the possible molding fault in the inspection target.

Furthermore, in addition to the aforementioned configuration, the inspection device of the present disclosure is configured to specify, as a molding fault in which a dimension of a shape of the possible molding fault is equal to or more than the given criterion value for the molding fault, among the detected possible molding faults. In the three-dimensional image measurement, for example, when the resolution of the image taken by the imaging unit is sufficiently high, even a minute flaw that cannot be a defect as a product may be detected. However, it is an excessive quality for the inspection to determine that all the minute flaws that cannot be defects as a product are the molding faults. Thus, as described above, by excluding the minute flaw that does not meet the criterion value from the target molding fault, it is possible to accurately detect only the molding fault having a dimension that can be a defect as a product.

Also, in the inspection device of the present disclosure, the following configuration may be further adopted. That is, the inspection device is configured such that the criterion value can be arbitrarily set and changed by a user. The fault specifying unit is configured to specify the molding fault by using the criterion value that is arbitrarily set and changed by the user. With this configuration, usefully, the criterion value for the molding fault can be freely changed depending on the quality required for the product.

Also, in the inspection device of the present disclosure, the following configuration may be further adopted. That is, the inspection device is configured such that the criterion value can be separately set to each region formed by dividing the three-dimensional surface shape represented by the nominal contour data into two or more regions. And the fault specifying unit is configured to specify the molding fault by using a criterion value of a region corresponding to a position of the possible molding fault detected by the comparing and detecting unit.

For example, it is conceivable that a portion where the material is formed into a steep shape by a molding process and a portion having a gentle surface may have different properties of the molding defect generated on the surface of each portion. Thus, according to the above-described configuration, it is possible to set an appropriate criterion value suitable for the shape of each portion of the molded article, and thus it is possible to accurately detect the molding fault.

Also, in the inspection device of the present disclosure, the following configuration may be further adopted. That is, the inspection device includes information indicating a grid number assigned to each grid formed by dividing the three-dimensional surface shape represented by the nominal contour data at given intervals. Then, an output unit is configured to output information indicating the molding fault specified by the fault specifying unit while associating with a grid number of a grid corresponding a position of the molding fault. Furthermore, the output unit may be configured to put a mark showing a type of the molding fault specified by the fault specifying unit and a grid number corresponding to the position of the molding fault onto the inspection target. With this configuration, it is usefully possible to easily grasp the molding fault at the time of the actual observation of the molded article.

In the meantime, on the surface of the molded article processed by a die, a scratch may be generated by friction with the die. The scratch caused by the die is formed as a portion exhibiting a stronger gloss than the periphery thereof, for example. Usually, such scratch is not treated as the molding fault if the shape of the product has no problem. However, if the scratch is strongly appeared, a user can confirm that the time to correct the die is approaching. Thus, it is preferable to detect the scratch apart from the molding fault.

Thus, in the inspection device of the present disclosure, it is preferable that the following configuration may be further adopted. That is, the inspection device may further include a gloss measuring unit, a scratch specifying device, a warning output unit. The gloss measuring unit is configured to measure a degree of a gloss on the surface of the inspection target from the image taken by the imaging device. The scratch specifying device is configured to specify a portion satisfying a given criterion for a scratch as a scratch based on a three-dimensional surface shape measured by the measuring unit and a distribution of the degree of the gloss measured by the gloss measuring unit. The warning output unit is configured to output a warning related to the scratch specified by the scratch specifying device. With this configuration, the scratch can be detected apart from the molding fault, thus, it is possible to accurately determine when to correct the die.

Also, in the inspection device of the present disclosure, the following configuration may be further adopted. That is, the inspection device further includes at least one standard arranged in the imaging range. The measuring unit is configured to measure also a three-dimensional surface shape of the standard imaged together with the inspection target by the imaging device. Then, the determiner collates the three-dimensional surface shape of the standard measured by the measuring unit and a given calibration data representing a normal three-dimensional surface shape corresponding the standard, then the determiner determines an appropriateness of an inspection result related to the inspection target depending on whether the three-dimensional surface shape of the standard conforms to the calibration data. With this configuration, it is possible to improve the reliability of the inspection result since the validity of the inspection result can be guaranteed for every inspection on each molded article.

In the inspection device of the present disclosure, the following configuration may be further adopted. That is, the inspection device includes two or more imaging units configured to each image a different portion of the inspection target. The measuring unit is configured to measure a three-dimensional surface shape of each portion with respect to an image taken by each of the two or more imaging devices. In addition, the comparing and detecting unit is configured to collate the three-dimensional surface shape of each portion measured by the measuring unit and the nominal contour data prepared for each portion, and the comparing and detecting unit is configured to detect the possible molding fault. With this configuration, a large-sized molded article that cannot be imaged by single imaging device, a molded article with front and back, and a molded article having a complex shape with a blind area can be inspected at once, and thus achieving an acceleration of the inspection.

Also, in the inspection device of the present disclosure, the following configuration may be further adopted. That is, the inspection device includes a robot arm, a first projection unit, a first imaging unit, a second projection unit, and a second imaging unit. The robot arm is configured to grasp and carry an inspection target came from a previous manufacturing process, and the robot arm is configured to place the inspection target on a conveyance device for loading and conveying the inspection target to a next manufacturing process. The first projection unit is configured to project the optical pattern onto a first surface of two surfaces composing a front and a back of the inspection target. The first imaging unit is configured to take an image including the optical pattern projected onto the first surface. The second projection unit is configured to project the optical pattern onto a second surface of the two surfaces composing the front and the back of the inspection target. The second imaging unit is configured to take an image including the optical pattern projected onto the second surface.

Then, the first projection unit and the first imaging unit is arranged at a position where a projection and a imaging of the optical pattern can be performed with respect to the inspection target that is grasped and carried by the robot arm. Also, the robot arm is configured to perform an operation of grasping the inspection target and an operation of directing the first surface towards the first projection unit and the first imaging unit, then the robot arm is configured to place the inspection target on the conveyance device with the second surface upward. On the other hand, the second projection unit and the second imaging unit are arranged at a position where the projection and the imaging of the optical pattern can be performed on the second surface of the inspection target placed on the conveyance device.

With this configuration, it is possible to inspect the molded article in a series of the operation where the molded article is conveyed in the manufacturing process without disturbing the flow of the conveyance. This achieves improvements in both productivity of the molded article and acceleration of the inspection.

### BRIEF DESCRIPTION OF THE DRAWINGS

FIG. 1 is a perspective view showing an external appearance of an inspection system.
FIG. 2 is a block diagram schematically showing a configuration of the inspection system.
FIG. 3 A is a block diagram schematically showing a configuration of a small-sized monocular camera unit.
FIG. 3 B is a block diagram schematically showing a configuration of a large-sized binocular camera unit.
FIG. 4 is a view showing one example of grid lines set to a three-dimensional surface shape of a nominal contour data.
FIG. 5 is a flowchart showing a procedure of an inspection process executed by a controller.

### EXPLANATION OF REFERENCE NUMERALS

1...inspection system, 2...press machine, 3...conveying conveyor, 4...defective product discharging conveyor, 5...pole, 6...frame structure, 10...workpiece pick-up robot, 20...first imaging unit, 21a, 21b...camera unit, 22...projector, 23...camera, 30...second imaging unit, 31a, 31b...camera unit, 40a, 40b...standard gauge, 50...defective workpiece discharger, 60...marking robot, 70...controller, 71...measurement processor, 72...system integrated management unit, 73...memory, 100...workpiece

### MODE FOR CARRYING OUT THE INVENTION

Hereinafter, embodiments of the present disclosure will be described with reference to the drawings. The present disclosure should not be limited to the embodiments below, but may be practiced in various forms.

### <Configuration of Inspection System>

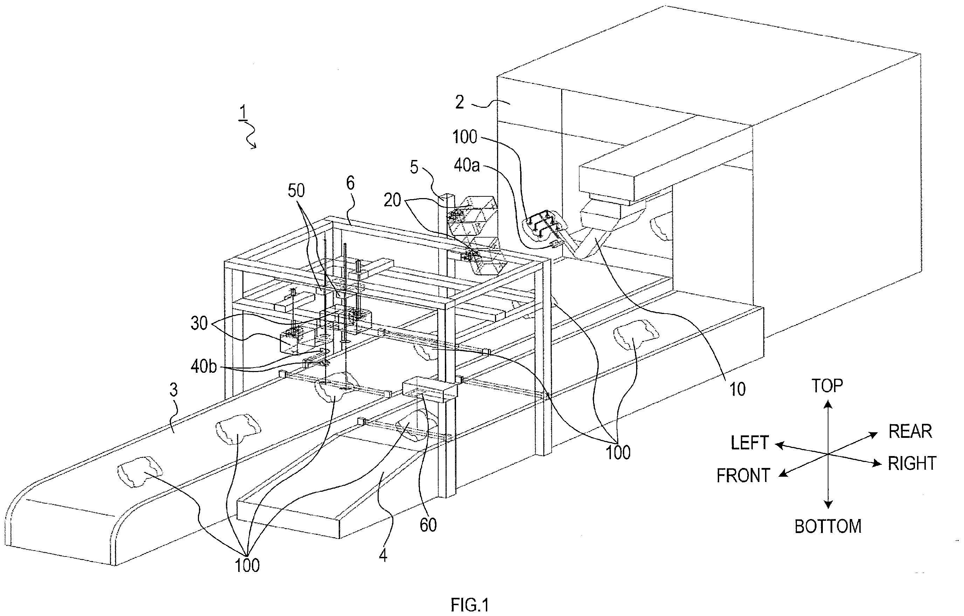

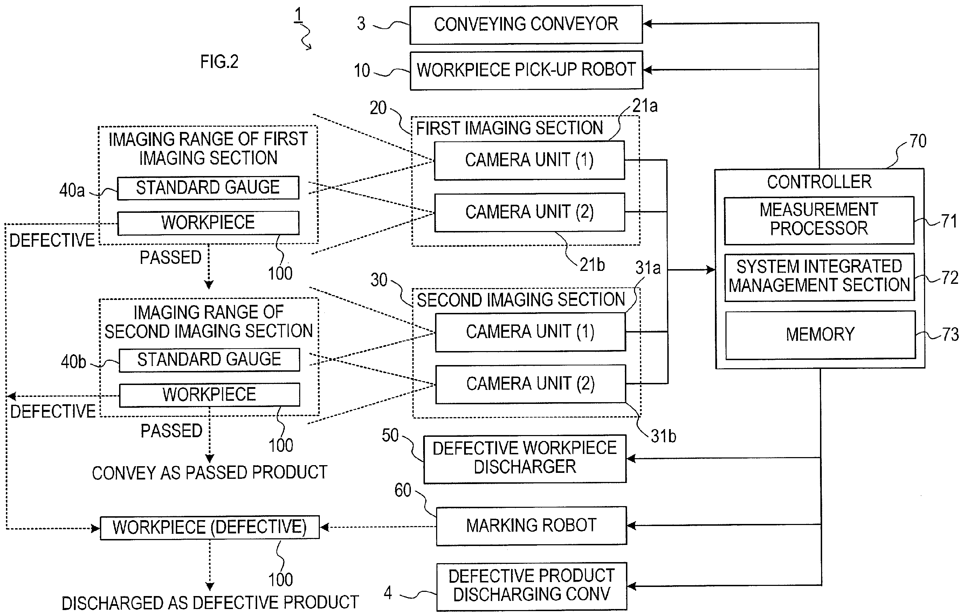

A configuration of an inspection system 1 of an embodiment will be described with reference to FIG. 1 and FIG. 2. In this embodiment, arrows indicating directions of top, bottom, front, rear, left, and right in FIG. 1 are described to promote understanding of relations between components. The present disclosure should not be limited to the directions of the arrows in FIG. 1.

The inspection system 1 is attached in association with a manufacturing line that conveys a workpiece 100, as an inspection target. The manufacturing line in which the inspection system 1 is applied includes a press machine 2, a conveying conveyor 3, and a defective product discharging conveyor 4. The press machine 2 produces the workpiece 100 by processing a metal material by press molding. The conveying conveyor 3 conveys the workpiece came out from the press machine 2 to a next manufacturing process. The workpiece 100 is a molded article produced by the press machine 2. The workpiece 100 has unevenness on the surface thereof. The inspection system 1 is configured to inspect the presence or absence of a molding fault for all the workpieces 100 while the workpiece 100 came out from the press machine 2 is conveyed to a next manufacturing process. The molding fault that is an inspection target for the inspection system 1 is a part corresponding to a molding defect including a flaw, dent, missing part, burr, crack, dross, and a peeling of plating generated during the molding process.

As shown in FIG. 1 and FIG. 2, the inspection system 1 includes a workpiece pick-up robot 10, a first imaging unit 20, a second imaging unit 30, standard gauge 40a, 40b, a defective workpiece discharger 50, a marking robot 60, and a controller 70. In the manufacturing line accompanied by the inspection system 1, the conveying conveyor 3 is arranged in front of the press machine 2. The conveying conveyor 3 is a carrying device to convey the workpiece 100 came out from the press machine 2 to a next manufacturing process. Also, the defective product discharging conveyor 4 is arranged beside the conveying conveyor 3. The defective product discharging conveyor 4 is a carrying device to discharge the workpiece 100, in which the molding fault is detected, from the manufacturing line. The conveying conveyor 3 and the defective product discharging conveyor 4 may be embodied as a belt conveyer and a roller conveyer, for example. The conveying conveyor 3 and the defective product discharging conveyor 4 convey the workpiece 100 placed thereon forward.

The workpiece pick-up robot 10 is arranged near an outlet through which the workpiece 100 comes out from the press machine 2. The workpiece pick-up robot 10 is an articulated robot arm with a vacuum gripper at the tip thereof to suck the workpiece 100. The workpiece pick-up robot 10 is operated based on control by the controller 70. The workpiece pick-up robot 10 sucks and grasps upward the workpiece 100 comes out from the press machine 2 with the vacuum gripper. Then, the workpiece pick-up robot 10 performs an operation of carrying the grasped workpiece 100 and placing it on the conveying conveyor 3 or the defective product discharging conveyor 4.

In this embodiment, it is assumed that the workpiece 100 has two surfaces composing front and back. One surface of the workpiece 100 (for example, a back side surface) is referred to as a first surface, and the other surface (for example, a front side surface) is referred to as a second surface. The workpiece pick-up robot 10 first grasps the second surface side of the workpiece 100 came out from the press machine 2 and lifts the workpiece 100. Then, while holding the workpiece 100, the workpiece pick-up robot 10 performs an operation of carrying the workpiece 100 within a given imaging range of the first imaging unit 20 provided in the vicinity thereof, and directing the first surface of the workpiece 100 towards the first imaging unit 20 in a predetermined posture. In a state where the first surface of the workpiece 100 is directed towards the first imaging unit 20, an image of the first surface of the workpiece 100 is taken by the first imaging unit 20.

The first imaging unit 20 is a device to image the first surface side of the workpiece 100 lifted and held by the workpiece pick-up robot 10. In this embodiment, a description will be given of a case where the first imaging unit 20 is configured by two camera units 21a, 21b. The configuration is not limited to this, and the first imaging unit 20 may be configured by one camera unit, or the first imaging unit 20 may be configured by three or more camera units.

The first imaging unit 20 is attached to a pole 5 standing beside the conveying conveyor 3. The camera units 21a, 21b may be attached to the pole 5 preferably at a position where each of the camera units 21a, 21b can image a whole first surface of the workpiece 100, which is held by the workpiece pick-up robot 10, from different directions. Alternatively, the camera units 21a, 21b may be attached so that the camera unit 21a captures one region, which is formed by dividing the whole first surface of the workpiece 100 into two regions, within the imaging range, and the camera unit 21b captures the other region within the imaging range. The camera units 21a, 21b output the data of the taken image to the controller 70.

Then, in the controller 70, a three-dimensional surface shape of the first surface of the workpiece 100 is measured from the taken image of the first surface, and then the presence or absence of the molding fault on the first surface of the workpiece 100 is inspected. As a result of the inspection and based on the control of the controller 70, the workpiece pick-up robot 10 puts the workpiece 100, which passed the inspection, on the conveying conveyor 3 with the second surface side up. On the other hand, the workpiece pick-up robot 10 places the workpiece 100, which is determined to be defective, on the defective product discharging conveyor 4 based on the control of the controller 70.

After the imaging carried out by the first imaging unit 20, the workpiece 100 placed on the conveying conveyor 3 by the workpiece pick-up robot 10 is conveyed forward by the conveying conveyor 3. Then, at the timing when the conveyed the workpiece 100 reaches within a given imaging range of the second imaging unit 30, the second imaging unit 30 takes an image of the second surface of the workpiece 100 based on the control of the controller 70.

The second imaging unit 30 is a device that images the second surface side of the workpiece 100, which is conveyed by the conveying conveyor 3, from above. In this embodiment, a description will be given of a case where the second imaging unit 30 is configured by two camera units 31a, 31b. The configuration is not limited to this, and the second imaging unit 30 may be configured by one camera unit, or and the second imaging unit 30 may be configured by three or more camera units.

The second imaging unit 30 is attached to a frame structure 6 arranged in a more front side than the first imaging unit 20. The frame structure 6 is a frame-shaped structure formed of poles and beams arranged to stride over the conveying conveyor 3 and the defective product discharging conveyor 4 arranged side by side. The camera unit 31a may be attached to the frame structure 6 preferably at a position where a whole second surface of the workpiece 100 can be imaged from different directions when the workpiece 100 conveyed on the conveying conveyor 3 reaches a given imaging position. Alternatively, the camera units 31a, 31b may be attached so that the camera unit 31a captures a first region, which is formed by diving the whole second surface of the workpiece 100 into two, within an imaging range, and the camera unit 31b captures a second region within the imaging range.

Each camera unit 31a, 31b of the second imaging unit 30 outputs the data of the taken image to the controller 70. When the second imaging unit 30 takes the image of the second surface of the workpiece 100, a three-dimensional surface shape of the second surface of the workpiece 100 is measured from the taken image in the controller 70, and the presence or absence of the molding fault in the second surface of the workpiece 100 is inspected.

Each camera unit 21a, 21b, 31a, 31b of the first imaging unit 20 and the second imaging unit 30 is configured to project light having a given wavelength and frequency to configure an image of a given stripe fringe pattern. In addition, camera units 21a, 21b, 31a, 31b are configured to image a region on which the light is projected (this region is the imaging range). As for the light projected from each camera unit 21a, 21b, 31a, 31b, a light made by combining different colors selected from the three primary colors of red, blue and green is used. Thus, it is possible to avoid interference between the stripe fringe patterns projected from respective camera units. Also, according to the known phase-shift method, a configuration may be adopted where several types of stripe fringe patterns, in which a light quantity distribution of each stripe in the fringe pattern is modulated to a sinusoidal wave, can be projected while shifting the phase. With this configuration, highly accurate measurement can be achieved.

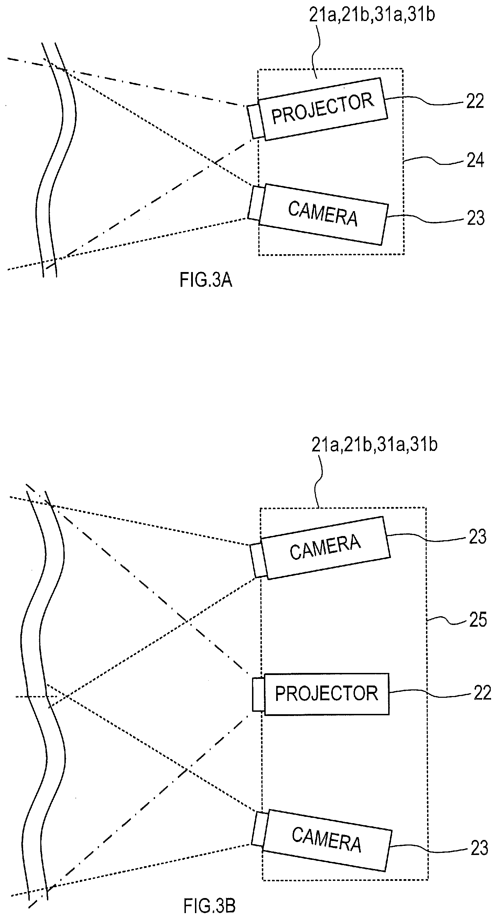

Here, an example of a specific configuration of each camera unit 21a, 21b, 31a, 31b used in the first imaging unit 20 and the second imaging unit 30 will be described with reference to FIG. 3 A and FIG. 3 B. When each camera unit 21a, 21b, 31a, 31b is not particularly distinguished, each camera unit 21a, 21b, 31a, 31b is simply referred to as a camera unit.

FIG. 3A shows an example of a configuration of a small-sized monocular camera unit including one projector 22 and one camera 23. The projector 22 is a light emitting device configured to selectively project an image formed by light having a given stripe fringe pattern and an image formed by light having no pattern. Examples of a light source used in the projector 22 may include a light emitting diode and a laser diode. The projector 22 may preferably adopt a configuration in which several types of stripe fringe patterns, in which the light quantity distribution of each stripe in the fringe pattern is modulated to the sinusoidal wave, can be projected while shifting the phase. With this configuration, by using the known phase-shift method, highly accurate measurement can be achieved. As a method to form the images having several types of stripe fringe patterns as described above, for example, a liquid crystal panel may be preferably used. The camera 23 is an imaging device to take an image in an area on which the light emitted from the projector 22 is projected. The camera 23 may include a known image sensor element, such as a CCD image sensor and a CMOS image sensor.

In the case shown in FIG. 3A, the projector 22 and the camera 23 are positioned and arranged in a casing 24 such that the area where a light is projected from one projector 22 overlaps with a visual field of one camera 23. This small-sized monocular camera unit is suitably used for taking an image of a relatively small inspection target.

On the other hand, FIG. 3B shows an example of a configuration of a large-sized binocular camera unit including one projector 22 and two cameras 23. In the case shown in FIG. 3B, the projector 22 and the cameras 23 are positioned and arranged in a casing 25 such that two regions, which are formed by dividing the area of the light projected by one projector 22, and two visual fields of the cameras 23 are respectively overlapped. This large-sized binocular camera unit is suitably used for taking an image of a relatively large inspection target.

A description will be given of FIG. 1 and FIG. 2 again. In the vicinity of the tip of the arm of the workpiece pick-up robot 10, a standard gauge 40a is attached. The standard gauge 40a is a standard used for an accuracy evaluation of the three-dimensional image measurement based on the image taken by the first imaging unit 20. The standard gauge 40a is attached to the workpiece pick-up robot 10 at a position where the standard gauge 40a comes in the imaging range of the first imaging unit 20 when the workpiece pick-up robot 10 is in the posture of directing the first surface of the workpiece 100 towards the first imaging unit 20.

Also, a standard gauge 40b is attached to the frame structure 6 below the second imaging unit 30. The standard gauge 40b is a standard used for the accuracy evaluation of the three-dimensional image measurement based on the image taken by the second imaging unit 30. The standard gauge 40b is attached to the frame structure 6 at a position where the standard gauge 40b comes in the imaging range of the second imaging unit 30. Examples of these standard gauges 40a, 40b may preferably include a known standard, such as a block gauge and a step gauge.

At the ceiling portion of the frame structure 6, the defective workpiece discharger 50 is provided. The defective workpiece discharger 50 is configured to execute an operation of discharging the workpiece 100, which is determined as a defective product by the inspection based on the image taken by the second imaging unit 30, from the conveying conveyor 3. Specifically, the defective workpiece discharger 50 includes a grasping means and a transporting means. The grasping means grasps and lifts the workpiece 100 placed on the conveying conveyor 3. The transporting means moves the grasping means in both ways between the upper part of the conveying conveyor 3 and the upper part of the defective product discharging conveyor 4 along the frame structure 6. Examples of the grasping means may preferably include a vacuum gripper or the like that can suck the workpiece 100. Based on the control of the controller 70, the defective workpiece discharger 50 lifts the workpiece 100, which is determined as the defective product, from the conveying conveyor 3, carries the workpiece 100 above the defective product discharging conveyor 4, and places the workpiece 100 on the defective product discharging conveyor 4.

The workpiece 100, which is determined as a passed product by the inspection based on the image taken by the second imaging unit 30, is conveyed forward by the conveying conveyor 3 and supplied to a next manufacturing process. On the other hand, the workpiece 100, which is determined as a defective product and placed on the defective product discharging conveyor 4, is conveyed forward by the defective product discharging conveyor 4 and discharged from the manufacturing line.

The marking robot 60 is attached to the frame structure 6 on a side of the defective product discharging conveyor 4 and on a front side of the frame structure 6. The marking robot 60 performs an operation of putting a mark indicating the content of the molding fault detected in the workpiece 100 on the defective workpiece 100 conveyed by the defective product discharging conveyor 4. Specifically, the marking robot 60 includes an ink jet print head at the tip of an articulated robot arm. The marking robot 60 is preferably configured to print characters and symbols indicating a type of the molding fault and a position of the molding fault and the like on the surface of the workpiece 100 based on control of the controller 70.

The controller 70 is an information processor mainly composed of a CPU, RAM, ROM, an input-output interface (not shown), and a memory 73. The memory 73 is an auxiliary memory including, for example, HDD and SSD. The controller 70 may be embodied by a computer system and the like having an appropriate information processing ability. Functions of the controller 70 are performed by the CPU executing programs stored in a substantive memory medium such as the ROM and the memory 73. It is to be noted that the number of the computers configuring the controller 70 may be one or more.

The controller 70 includes a measurement processor 71 and a system integrated management unit 72 as components to fulfill the functions. It is to be noted the way to realize these elements configuring the controller 70 is not limited to software, but a part or all of the element may be realized by hardware that is a combination of a logic circuit, an analog circuit and the like.

The measurement processor 71 measures a three-dimensional surface shape of the workpiece 100 using the images taken by the first imaging unit 20 and the second imaging unit 30. Then, the measurement processor 71 detects the molding fault from the three-dimensional surface shape. Specifically, the measurement processor 71 compares the three-dimensional surface shape measured from the workpiece 100 with a three-dimensional surface shape represented by given nominal contour data, and then specifies, as a possible molding fault, a portion having a dissimilar shape in the three-dimensional surface shape measured from the workpiece 100.

In this embodiment, a known pattern projection method is used. In the pattern projection method, as the three-dimensional surface shape, a given stripe fringe pattern is projected onto the inspection target, and then the three-dimensional surface shape is measured based on a degree of distortion of the stripe fringe pattern projected onto the inspection target. One of the examples of this type of the pattern projection method includes a phase-shift method. In the phase-shift method, the stripe fringe pattern, in which a projection intensity is modulated to the sinusoidal wave, is projected several times while shifting the phase to measure the three-dimensional surface shape.

The nominal contour data used for the detection of the molding fault is data representing a three-dimensional surface shape that serves as a criterion for a non-defective workpiece 100. The nominal contour data is pre-stored in the memory 73 and the like of the controller 70. When the surface of the workpiece 100 is divided into several regions and an image is separately taken for each region, several types of the nominal contour data, each of which corresponds to each region, may be preferably included. In this embodiment, the nominal contour data includes a nominal contour data corresponding to the three-dimensional surface shape of the first surface side of the workpiece 100 and a nominal contour data corresponding to the three-dimensional surface shape of the second surface side of the workpiece 100.

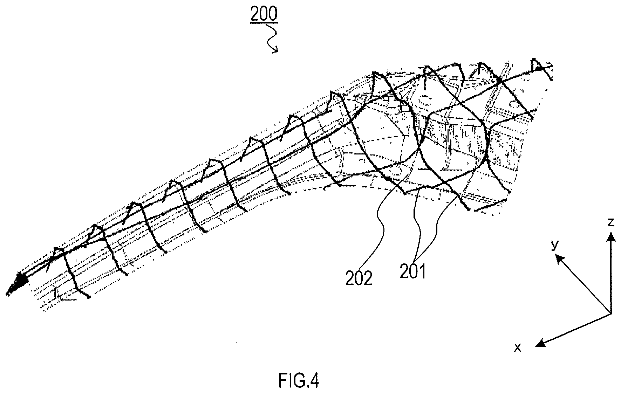

Also in the nominal contour data, a grid line is added at a given distance (for example, every 50 mm) to the three-dimensional surface shape represented by the nominal contour data, and a specific number (hereinafter, referred to as a grid number) is added to each grid of the three-dimensional surface shape divided by the grid lines. A specific example will be described with reference to FIG. 4. In FIG. 4, a reference numeral 200 denotes the three-dimensional surface shape represented by the nominal contour data. A reference numeral 201 denotes two or more grid lines drawn at equal intervals in an x axis direction and a y axis direction of the three-dimensional surface shape 200. A reference numeral 202 denotes each grid surrounded by two or more grid lines 201. A specific grid number is added to each of the two or more grids 202 divided by two or more grid lines 201.

When a nominal contour data is newly registered, the controller 70 assigns the grid lines and the grid number to a three-dimensional surface shape represented by the nominal contour data, and stores them in the memory 73 and the like together with the nominal contour data. The measurement processor 71 specifies the position of the molding fault detected in the workpiece 100 by associating with the corresponding grid number.

A description will be given of FIG. 1 and FIG. 2 again. Among the possible molding faults detected from the three-dimensional surface shape of the workpiece 100 by using the nominal contour data, the measurement processor 71 specifies a possible molding fault as the molding fault only when the dimension of the deformed portion is a given criterion value or more. The dimension of the deformed portion includes a length, depth or height. This criterion value represents a criterion of the dimension of the molding fault that may be a practical defect as a product when in use, and the criterion value is preregistered in the memory 73 and the like of the controller 70. Also, it is preferable that this criterion value can be set and changed by a user of the inspection system 1. In this case, the controller 70 saves the criterion value, which is input via a specified input device by the user, in the memory 73.

It is to be noted that the criterion value provides only the dimension of the molding fault that can be a practical defect as a product, and the criterion value is not a minimum dimension of the deformed portion that is theoretically detectable based on the resolution of the taken image. In other words, when a camera has, for example, a precision enough to detect the deformed portion of 1/100 mm to 1/1000 mm but the criterion value is set to the dimension of 1/10 mm, the fine deformed portion less than the criterion value is not determined as the molding fault.

Also, it may be possible to set a different criterion value to each portion of the three-dimensional surface shape represented by the nominal contour data. Specifically, the controller 70 divides the three-dimensional surface shape of the nominal contour data into two or more regions, and saves the criterion value set to each of the two or more divided regions in the memory 73. For example, by respectively setting different criterion values to a portion with steep bending and a gently processed portion, it is possible to accurately detect the molding fault peculiar to each portion.

Furthermore, the measurement processor 71 is configured to perform, in addition to the inspection of the presence or absence of a molding fault, a diagnosis of the deterioration of a die in the press machine 2 based on a state of a scratch that may be formed on the surface of the workpiece 100. In the press molding process, the scratch that may be formed on the surface of the molded article by friction between the metal material and the die exhibits a strong gloss. Thus, in this embodiment, the measurement processor 71 calculates, from the taken image of the workpiece 100, a brightness value of each point in the image for a specific portion having the steep shape, and determines the presence or absence of the scratch caused by the friction with the die based on the calculated brightness value.

The system integrated management unit 72 integrally controls the operations of the manufacturing line including the conveying conveyor 3 and the defective product discharging conveyor 4, and the inspection system 1. Specifically, the system integrated management unit 72 interlocks and controls, in accordance with the manufacture of the workpiece 100 by the press machine 2, the operation of each unit in the inspection system 1 and the operations of the conveying conveyor 3 and the defective product discharging conveyor 4. Here, each unit in the inspection system 1 includes the workpiece pick-up robot 10, the first imaging unit 20, the second imaging unit 30, the defective workpiece discharger 50, and the marking robot 60.

For example, the system integrated management unit 72 performs the imaging of the workpiece 100 by controlling the first imaging unit at the timing when the workpiece 100 is placed in the imaging range of the first imaging unit 20 by controlling the workpiece pick-up robot 10. Also, the system integrated management unit 72 controls the conveying conveyor 3 to convey the workpiece 100 to the imaging range of the second imaging unit 30, and at that timing, the system integrated management unit 72 performs the imaging of the workpiece 100 by controlling the second imaging unit. In addition, the system integrated management unit 72 controls the defective product discharging conveyor 4 to convey a defective workpiece 100 to a work area of the marking robot 60, and at that timing, the system integrated management unit 72 performs a marking on the surface of the workpiece 100 by controlling the marking robot 60.

### [Procedure of Inspection Process]

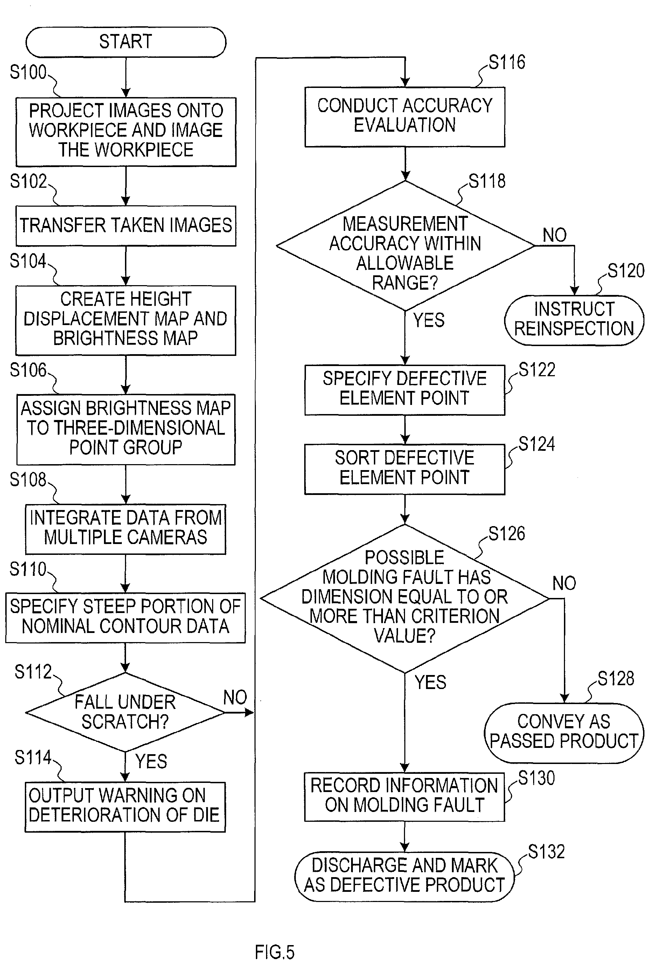

A procedure of an inspection process executed by the controller 70 will be described with reference to a flowchart of FIG. 5. This inspection process is executed with respect to each workpiece 100 when each workpiece 100 is placed in each imaging range of the first imaging unit 20 and the second imaging unit 30 by the workpiece pick-up robot 10 and the conveying conveyor 3.

In S100, the controller 70 images the first surface or the second surface of the workpiece 100 by controlling each camera unit of the first imaging unit 20 or the second imaging unit 30 when the workpiece 100 is placed in the imaging range. Specifically, based on the control by the controller 70, the projector 22 of each imaging camera unit alternately emits the image formed by the light having the stripe fringe pattern and the image formed by the light having no pattern. Then, the camera 23 of each imaging camera unit takes the fringe-patterned images and the no-patterned images projected onto the workpiece 100 and the standard gauges 40a, 40b. In S102, after the imaging in S100, each camera 23 transfers data of the fringe-patterned images and the non-patterned images to the measurement processor 71 of the controller 70.

In S104, the controller 70 creates a height displacement map for each fringe-patterned image transferred in S102. Here, the height displacement map is a map data representing a distribution of the height displacement of each pixel in the taken images. To create the height displacement map, a known phase-shift method may be preferably used. That is, the controller 70 calculates the height displacement for each pixel in the taken images by using the taken images in which the stripe fringe pattern modulated to the sinusoidal wave is projected several times while shifting the phase. Also in S104, the controller 70 creates a brightness map for each non-patterned image transferred in S102. Here, the brightness map is map data representing a distribution of the brightness value of each pixel in the taken images.

In S106, the controller 70 converts the height displacement map created in S104 to a three-dimensional point group represented by a three-dimensional coordinate system. Then, with respect to each point in the converted three-dimensional point group, the measurement processor 71 assigns the brightness value of the corresponding point in the brightness map that is created in S104 from the images taken by the same camera, and creates a three-dimensional point group/brightness data.

In S108, the controller 70 integrates data of the three-dimensional point group/brightness created from the images taken by two or more camera units into the same three-dimensional coordinate system. Specifically, when the first imaging unit 20 performed the imaging, the controller 70 integrates the three-dimensional point group/brightness data created from the images taken by the two camera units 21a, 21b composing the first imaging unit 20 into one to obtain a three-dimensional point group/brightness data of a whole first surface of the workpiece 100. Alternatively, when the second imaging unit 30 performed the imaging, the controller 70 integrates the three-dimensional point group/brightness data created from the images taken by the two camera units 31a, 31b composing the second imaging unit 30 to obtain a three-dimensional point group/brightness data of a whole second surface of the workpiece 100.

In S110, the controller 70 specifies a steep portion from the nominal contour data corresponding to the first surface or second surface of the workpiece 100 imaged in S100. Here, the steep portion is a portion representing a steep shape having a bending curvature smaller than a specified threshold in the three-dimensional surface shape represented by the nominal contour data. In S112, based on the three-dimensional point group/brightness data integrated in S108, the controller 70 determines whether a distribution of the brightness values assigned to the portion corresponding to the steep portion falls under the scratch. Specifically, the controller 70 determines the presence of the scratch under a condition where a point exceeding a brightness threshold serving as a criterion for the scratch is continuously distributed beyond a specified dimensional range in the portion corresponding to the steep portion.

When the distribution of the brightness values in the portion corresponding to the steep portion does not fall under the scratch (S112: NO), the controller 70 advances the process to S116. On the other hand, when the distribution of the brightness values in the portion corresponding to the steep portion falls under the scratch (S112: YES), the controller 70 advances the process to S114. In S114, a warning information of the deterioration of the die in the press machine 2 is output to a given output destination (for example, a display device, a recording device and the like).

In the next S116, the controller 70 extracts data of the three-dimensional point group corresponding to the standard gauges 40a, 40b from the three-dimensional point group/brightness data integrated in S108. Then, the controller 70 evaluates the accuracy of the three-dimensional image measurement using the extracted three-dimensional point group data. Specifically, the controller 70 collates the three-dimensional surface shape represented by the three-dimensional point group corresponding to the standard gauges 40a, 40b and a three-dimensional surface shape represented by a given calibration data. Then, the controller 70 evaluates the accuracy of the measurement based on a matching degree between the three-dimensional surface shape of the standard gauges 40a, 40b and the three-dimensional surface shape of the calibration data. The calibration data used for the accuracy evaluation in S115 is data representing a reference three-dimensional surface shape of the standard gauges 40a, 40b when the standard gauges 40a, 40b are appropriately imaged. In this embodiment, the configuration data is prestored in the memory 73 and the like of the controller 70.

In S118, the controller 70 branches the process depending on whether the accuracy evaluated in S116 is within a given allowable range for a measurement accuracy. When the evaluated accuracy deviates the allowable range (S118: NO), the controller 70 advances the process to S120. In S120, the controller 70 outputs information to instruct a reinspection of the workpiece 100 to a given output destination (for example, a display device, a recording device and the like).

On the other hand, when the evaluated accuracy is determined to fall within the allowable range (S118: NO), the controller 70 advances the process to S122. In S122, the controller 70 collates the three-dimensional surface shape of the inspection target represented by the three-dimensional point group/brightness data integrated in S108 and the three-dimensional surface shape represented by the nominal contour data corresponding to the inspection target, and then specifies a deformed point that can be the possible molding fault. Specifically, the controller 70 compares the three-dimensional surface shape of the inspection target and the three-dimensional surface shape of the nominal contour data, and then creates a deviation value distribution diagram showing a similarity/dissimilarity of the shape of the inspection target. Then, the controller 70 detects, as a defective element point, the deformed point that exceeds an allowable value for the molding quality in the created deviation value distribution diagram.

In S124, the controller 70 selects the defective element points detected in S122. Specifically, from the defective element points detected in S122, the controller 70 selects a portion having two or more consecutive points (for example, three consecutive points or more) as the possible molding fault. On the other hand, the controller 70 removes other scattered defective element points. Also, the controller 70 calculates a dimension of the selected possible molding fault. Here, the dimension include, for example, a length, a depth or a height of a shape of the possible molding fault. In S126, the controller 70 determines whether the dimension of the shape of the possible molding fault selected in S124 falls under the criterion value for the molding fault or more.

In S126, the measurement processor 71 may conduct the determination using one type of the criterion value corresponding to the workpiece 100 of the inspection target. Alternatively, the measurement processor 71 may conduct the determination using several types of the criterion value respectively set for several portions of the workpiece 100. When using the several types of the criterion value, the measurement processor 71 uses the criterion value corresponding to a portion where the possible molding fault exists to conduct the determination.

When the dimension of the possible molding fault is less than the criterion value (S126: NO), the controller 70 advances the process to S128. In S128, the workpiece 100 that is determined in S126 is conveyed as a passed product based on the control of the controller 70. Specifically, when the workpiece 100 imaged by the first imaging unit is determined as the passed product, the controller 70 controls the workpiece pick-up robot 10 as follows. That is, the controller 70 makes the workpiece pick-up robot 10 execute an operation in which the workpiece 100 held by the workpiece pick-up robot 10 is placed on the conveying conveyor 3. Also, when the workpiece 100 imaged by the second imaging unit is determined as the passed product, the controller 70 controls the conveying conveyor 3 to convey the workpiece 100 forward.

On the other hand, in S126, when the dimension of the possible molding fault is determined to equal to or more than the criterion value (S126: YES), the controller 70 advances the process to S130. In S130, the controller 70 confirms that the possible molding fault, which is determined in S126 to have the dimension equal to or more than the criterion value, is a molding fault. Then, the controller 70 records the information on the confirmed molding fault in a specified archive destination (for example, the memory 73).

Specifically, the controller 70 records information including the three-dimensional point group data measured from the workpiece 100, the dimension of the shape forming the molding fault, a position where the molding fault occurs, a time when the molding fault is detected, and an identification number to identify the workpiece 100. In this embodiment, as the information representing the position where the molding fault occurs, the grid number assigned to each grid (see FIG. 4) set to the nominal contour data. In other words, the controller 70 records the grid number corresponding to the position where the detected molding fault exists as the occurrence position of the molding fault. Also, the controller 70 creates a stereoscopic image in which a shading process is applied to the three-dimensional surface shape represented by the three-dimensional point group forming the molding fault, and saves the created image.

In S132, the workpiece 100 having the detected molding fault is discharged as a defective product by the control of the controller 70. Specifically, when the molding fault is detected in the workpiece 100 imaged by the first imaging unit, the controller 70 controls the workpiece pick-up robot 10 as follows. That is, the controller 70 makes the workpiece pick-up robot 10 execute an operation to place the workpiece 100 held by the workpiece pick-up robot 10 on the defective product discharging conveyor 4. Also, when the molding fault is detected in the workpiece 100 imaged by the second imaging unit, the controller 70 controls the defective workpiece discharger 50 as follows. That is, the controller 70 makes the defective workpiece discharger 50 execute an operation to lift the workpiece 100 from the conveying conveyor 3, and then carry and place the lifted the workpiece 100 on the defective product discharging conveyor 4.

After that, the controller 70 operates the defective product discharging conveyor 4 to convey the workpiece 100 that is the defective product forward. When the workpiece 100 conveyed by the defective product discharging conveyor 4 reaches within the work area of the marking robot 60, the controller 70 controls the marking robot 60 to print information related to the molding fault on the surface of the workpiece 100. The information the marking robot 60 prints on the workpiece 100 preferably includes, for example, the grid number indicating the position of the molding fault, and information indicating a type of the molding fault. It may be possible to adopt a configuration in which the controller 70 determines, based on the dimensions and a shape of the molding fault, the type of the molding fault, such as a flaw, dent, missing part, burr, crack, dross, peeling of plating.

### [Effect]

According to the inspection system 1 of the embodiment, the following effects can be achieved.

According to the inspection system 1, it is possible to inspect the presence or absence of the molding fault in the workpiece 100 with high speed and excellent accuracy by using the three-dimensional image measurement. Specifically, the inspection system 1 can detect the possible molding fault in the workpiece 100 by collating the three-dimensional surface shape of the workpiece 100 measured by the method of the three-dimensional image measurement and the nominal contour data representing the three-dimensional surface shape of the non-defective product of the workpiece 100.

Then, the inspection system 1 specifies, among the detected possible molding faults, only a possible molding fault in which the dimension thereof is equal to or more than the criterion value as the molding fault. In the three-dimensional image measurement, for example, when the resolution of the image to be taken is sufficiently high, even a fine scratch that cannot be the defect as a product can be detected. Thus, by removing the fine scratch that does not satisfy the criterion value from the target of the molding fault, it is possible to accurately detect the molding fault whose dimension can be the defect as a product.

In addition, in the inspection system 1, the criterion values can be arbitrarily set and changed by a user, which makes it possible to freely change the criterion value for the molding fault depending on a quality required for the product. Furthermore, by configuring such that the criterion value can be separately set for each region formed by diving the three-dimensional surface shape represented by the nominal contour data into two or more regions, it is possible to accurately detect the molding fault in accordance with the shape of each portion of the workpiece 100.

Also in the inspection system 1, the position of the molding fault can be indicated by the grid number obtained by dividing the three-dimensional surface shape represented by the nominal contour data at every given distance. In addition, by the marking robot 60, a mark indicating the type and the position of the molding fault can be directly printed on the surface of the workpiece 100. This allows to easily recognize the position of the molding fault at the time of the actual observation of the workpiece 100 in which the molding fault is detected.

Also in the inspection system 1, in addition to the molding fault, the scratch can be detected in the portion processed into a steep shape. This makes it possible to output the warning of the deterioration in the die. With this configuration, the time to correct the die can be accurately determined.

Also in the inspection system 1, by arranging the standard gauge 40a in the imaging range of the first imaging unit 20 and by arranging the standard gauge 40b in the imaging range of the second imaging unit 30, it is possible to guarantee the validity of each inspection result carried on each workpiece 100.

Also the inspection system 1, the number of the camera unit configuring the first imaging unit 20 and the second imaging unit 30 can be set to one or more depending on a shape and a scale of the workpiece 100. By using two or more camera units for one imaging, a large-sized molded article that cannot be imaged by one camera unit, a molded article with front and back, and a molded article having a complex shape with a blind area can be inspected at once, and thus achieving the inspection with higher speed.

Also the inspection system 1, it is possible to inspect the workpiece 100 without interrupting the flow of the conveyance of the workpiece 100 came out from the press machine 2 to a next manufacturing procession by cooperating with the conveying conveyor 3 and the defective product discharging conveyor 4 configuring the manufacturing line. This achieves improvement in both productivity and inspection speed of the molded article, and thus, even the total inspection of mass-produced molded articles can be realized.

Here a correspondence of terms will be described. The camera units 21a, 21b of the first imaging unit 20 correspond to one example of the first projection unit and the first imaging unit. The camera units 31a, 31b of the second imaging unit 30 correspond to one example of the second projection unit and the second imaging unit. The processes of SS104, S106, and S108 executed by the controller 70 correspond to one example of the processes performed by a measuring unit and a gloss measuring unit. The processes of S122 and S124 executed by the controller 70 correspond to one example of the process performed by a comparing and detecting unit. The process of S126 executed by the controller 70 correspond to one example of the process performed by a fault specifying unit.

The processes of S130 and S132 executed by the controller 70, and the marking robot 60 correspond to one example of an output unit. The processes of S110 and S112 executed by the controller 70 correspond to one example of the process performed by a scratch specifying device. The standard gauges 40a, 40b correspond to one example of a standard. The processes of S116 and S118 executed by the controller 70 correspond to one example of the process performed by a determiner. The workpiece pick-up robot 10 corresponds to one example of a robot arm.

### [Modified Example]

In each of the aforementioned embodiments, one function of one element may be achieved by two or more elements; or two or more functions of two or more elements may be achieved by one element. A part of the configuration of the aforementioned each embodiment may be omitted; and at least a part of the configuration of the aforementioned each embodiment may be added to or replaced with another part of the aforementioned embodiments. It should be noted that any and all modes encompassed in the technical ideas that are defined by the languages in the claims are embodiments of the present disclosure.

The present disclosure can also be achieved in various forms such as a program to enable a computer to function as the above-described the controller 70, a substantive memory medium including a semiconductor memory storing the program, and an inspection method for a molded article.

In the above-described the inspection system 1, a description has been made of a case where the molding fault such as flaws in the molded article is targeted for inspection. In addition to the above-described function of the inspection system 1, the inspection system 1 may be further configured to have a function for inspecting dimensions of the molded article. Here, the inspection of the dimensions means to inspect an accuracy of the dimensions of a processed portion in the molded article, such as a distance between holes formed in the molded article and a distance from an end portion to a hole of the molded article, by measuring a distance or the like between arbitrary points of a geometric shape. Such dimensional inspection is a standard function in a conventional noncontact three-dimensional measuring instrument.

When the function of the dimensional inspection of the molded article is further added to the inspection system 1 in the aforementioned embodiment, the following configuration may be preferably adopted. That is, the inspection system 1 is configured such that a user can arbitrarily and selectively execute three inspection modes of (1) inspecting only the molding fault, (2) inspecting only the dimensions, and (3) inspecting the molding fault and the dimensions at the same time.

In the above-described the inspection system 1, a description has been made of a case where the inspection is performed on the molded article manufactured by press-forming. However, the present disclosure is not limited to the application for the molded article manufactured by the press-forming, and the present disclosure is applicable to molded articles manufactured by various processing methods such as injection molding, forging, casting, and extrusion molding.

## Claims

1. An inspection device comprising:
at least one projection unit configured to project a specific optical pattern onto a given imaging range;
at least one imaging unit configured to take an image including the optical pattern projected onto an inspection target in the imaging range;
a measuring unit configured to measure a three-dimensional surface shape of the inspection target based on the optical pattern included in the image taken by the imaging unit;
a comparing and detecting unit configured to collate the three-dimensional surface shape measured by the measuring unit and a given nominal contour data representing a three-dimensional surface shape of a non-defective product corresponding to the inspection target, the comparing and detecting unit being configured to detect, as a possible molding fault, in the three-dimensional surface shape of the inspection target, a portion recognized to show a shape different from the three-dimensional surface shape of the non-defective product, together with a dimension of the shape; and
a fault specifying unit configured to specify, as a molding fault, only a possible molding fault in which a dimension of a shape of the possible molding fault is equal to or more than a given criterion value representing a criterion for the molding fault, among a plurality of the possible molding faults detected by the comparing and detecting unit.

2. The inspection device according to claim 1,
wherein the criterion value is configured to be arbitrarily set and changed by a user, and
wherein the fault specifying unit is configured to specify the molding fault by using the criterion value arbitrarily set and changed by the user.

3. The inspection device according to claim 1 or claim 2,
wherein the criterion value is configured to be separately set to each region formed by dividing the three-dimensional surface shape represented by the nominal contour data into two or more regions,
wherein the fault specifying unit is configured to specify the molding fault by using a criterion value of a region corresponding to a position of the possible molding fault detected by the comparing and detecting unit.

4. The inspection device according to any one of claims 1 to 3, further comprising:
information indicating a grid number assigned to each grid formed by dividing the three-dimensional surface shape represented by the nominal contour data at given intervals; and
an output unit configured to output information indicating the molding fault specified by the fault specifying unit while associating with a grid number of a grid corresponding to a position of the molding fault.

5. The inspection device according to claim 4,
wherein the output unit is configured to put a mark representing a content of the molding fault specified by the fault specifying unit and the grid number corresponding to the position of the molding fault onto the inspection target.

6. The inspection device according to any one of claims 1 to 5, further comprising:
a gloss measuring unit configured to measure a degree of a gloss on a surface of the inspection target from the image taken by the imaging device;
a scratch specifying device configured to specify a portion satisfying a given criterion for a scratch as a scratch based on the three-dimensional surface shape measured by the measuring unit and a distribution of the degree of the gloss measured by the gloss measuring unit; and
a warning output unit configured to output a warning related to the scratch specified by the scratch specifying device.

7. The inspection device according to any one of claims 1 to 6, further comprising:
at least one standard arranged in the imaging range;
wherein the measuring unit is configured to measure also a three-dimensional surface shape of the standard imaged together with the inspection target by the imaging device, and
a determiner configured to collate the three-dimensional surface shape of the standard measured by the measuring unit and a given calibration data representing a normal three-dimensional surface shape corresponding to the standard, the determiner being configured to determine an appropriateness of an inspection result related to the inspection target depending on whether the three-dimensional surface shape of the standard conforms to the calibration data.

8. The inspection device according to any one of claims 1 to 7, comprising
two or more imaging units configured to each image a different portion of the inspection target,
wherein the measuring unit is configured to measure a three-dimensional surface shape of each portion with respect to an image taken by each of the two or more imaging devices,
wherein the comparing and detecting unit is configured to collate the three-dimensional surface shape of each portion measured by the measuring unit and the nominal contour data prepared for each portion, and the comparing and detecting unit is configured to detect the possible molding fault.

9. The inspection device according to claim 8, comprising:
a robot arm configured to grasp and carry the inspection target came out from a previous manufacturing process, the robot arm being configured to place the inspection target on a conveyance device for loading and conveying the inspection target to a next manufacturing process;
a first projection unit configured to project the optical pattern onto a first surface of two surfaces composing a front and a back of the inspection target;
a first imaging unit configured to take an image including the optical pattern projected onto the first surface;
a second projection unit configured to project the optical pattern onto a second surface of the two surfaces composing the front and the back of the inspection target; and
a second imaging unit configured to take an image including the optical pattern projected onto the second surface,
wherein the first projection unit and the first imaging unit are arranged at a position where a projection and an imaging of the optical pattern can be performed with respect to the inspection target that is grasped and carried by the robot arm,
wherein the robot arm is configured to perform an operation of grasping the inspection target and an operation of directing the first surface towards the first projection unit and the first imaging unit, then the robot arm is configured to place the inspection target on the conveyance device with the second surface upward, and
wherein the second projection unit and the second imaging unit are arranged at a position where the projection and the imaging of the optical pattern can be performed on the second surface of the inspection target placed on the conveyance device.
